(19) Europäisches Patentamt
European Patent Office
Office européen des brevets

(11) Publication number: 0 244 459
B1

(12) # EUROPEAN PATENT SPECIFICATION

(45) Date of publication of the patent specification:
07.02.90

(51) Int. Cl. 5: C 07 F 9/38

(21) Application number: 86906612.6

(22) Date of filing: 17.10.86

(86) International application number:
PCT/US 86/02165

(87) International publication number:
WO 87/02363 (23.04.87 Gazette 87/09)

(54) **PROCESS FOR THE PRODUCTION OF ALIPHATIC PHOSPHONIC ACIDS.**

(30) Priority: 18.10.85 US 789025

(43) Date of publication of application:
11.11.87 Bulletin 87/46

(45) Publication of the grant of the patent:
07.02.90 Bulletin 90/06

(84) Designated Contracting States:
DE FR GB IT

(56) References cited:
GB-A-1 187 002
US-A-4 064 163

(73) Proprietor: RHONE POULENC NEDERLAND B.V.
Draaistroom 1 Postbus 10
NL-1180 AA Amstelveen (NL)

(72) Inventor: YOUNG, Kai, Wing
505 Annandale Drive
Cary, NC 27511 (US)
Inventor: ZULLO, John, Joseph
Thatcher Hill Road-Rte. No. 6
Flemington, NJ 08822 (US)

(74) Representative: Brachotte, Charles
RHONE-POULENC AGROCHIMIE P.I.D. BP 9163
F-69263 Lyon Cedex 09 (FR)

EP 0 244 459 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBERGRAF, STOCKHOLM 1990

## Description

## Background of the Invention

### Field of the Invention

This invention relates to an improved process for the manufacture of aliphatic phosphonic acids, and more particularly to a process for the manufacture of a 2-haloethylphosphonic acid and still more particularly, to the manufacture of 2-chloroethylphosphonic acid.

### Summary of Prior Art

It is known in the art, that certain aliphatic phosphonic acids, particularly 2-haloethylphosphonic acids and derivatives thereof, are valuable as plant growth regulators in the agricultural field. The chloro compound i.e., 2-chloroethylphosphonic acid has been used extensively as a plant growth regulator for increasing crop yield of, for example, pineapples, soybeans, and the like. The usefulness of these compounds is illustrated for example in the publication of Nature, vol. 218, page 974 (1969) by Cooke and Randall; and U.S. Patent No. 3 879 188 issued April 22, 1985 entitled "Growth Regulation Process" invented by Fritz, Evans, and Cooke.

The manufacture of 2-chloroethylphosphonic acid (ETHEPHON) is well known in the art. British Pat. No. 1 373 513 describes a process for the manufacture of chloroethylphosphonic acid which comprises cleaving the diester with aqueous hydrochloric acid optionally in the presence of gaseous hydrogen chloride at a temperature of about 100°C and under an elevated pressure, continuously or discontinuously distilling off the 1,2-dichloroethane formed during the reaction and maintaining an elevated pressure by adding gaseous hydrogen chloride continuously or discontinuously during the reaction.

Another variation on the process of cleaving the diester is described in U.S. Pat. No. 3 808 265 which describes a process for the manufacture of 2-chloroethylphosphonic acid by reacting the diester and concentrated aqueous hydrochloric acid under pressure of injected hydrogen chloride gas sufficient to replenish the reacted HCl and maintain the concentration of the aqueous hydrochloric acid above about 23 % at a temperature of about 100°C to 145°C, cooling the reaction product to obtain a two-phase liquid system consisting of an aqueous phase containing 2-chloroethylphosphonic acid and an organic phase containing ethylene dichloride, drawing off the ethylene dichloride phase and recovering 2-chloroethylphosphonic acid from the aqueous phase.

All of the above processes involve the acid cleavage of the ester groups from the diester of the phosphonic acid to yield the corresponding phosphonic acid.

This cleavage reaction for the manufacture of phosphonic acid occurs in a stepwise manner. The diester is converted to the half ester which, in turn, is cleaved to the phosphonic acid.

The cleavage of the bis (2-chloroethyl)-2-chloroethylphosphonate (the diester), by known prior art methods utilizing anhydrous HCl, depending upon reaction conditions and concentrations, can produce from 45 to 84 % 2-chloroethylphosphonic acid and from 3 to 30 of the mono-2-chloroethyl-2-chloroethylphosphonate (the half ester).

A major impurity in the manufacture of 2-haloethylphosphonic acid is the half ester of the corresponding acid.

It is highly desirable, when applying 2-haloethylphosphonic acid to plants, that the compositions applied be sufficiently free of impurities such as half esters of 2-haloethylphosphonic acids, to avoid the toxic or potentially toxic effects of these impurities on plants. It is thus highly desirable to either remove the half ester from the crude reaction mixture obtained from the cleavage of the diester of the corresponding acid or to obtain within reasonable operating parameters, i.e., time, pressures, concentrations, etc., substantially complete reaction of the diester and half ester to 2-chloroethylphosphonic acid.

Generally, attempts have been made to purify 2-haloethylphosphonic acid manufactured from the prior art processes.

U.S. Pat. No. 3 626 037 describes the extraction with benzene of the monoester of 2-chloroethylphosphonic acid from a reaction mixture containing the monoester and 2-chloroethylphosphonic acid. The disadvantages of using benzene as a commercially practical extracting solvent are that it is highly flammable, acutely toxic to humans, and gives poor phase separation when used as an extracting solvent for the half ester of haloethylphosphonic acid.

British Patent GB-A-1 187 002 describes preparation of 2-chloroethylphosphonic acid from the corresponding diester. However in the reality of facts, the product of reaction is a crude product containing substantial amount of impurities such as the half ester.

One serious drawback with attempting to obtain the highly pure aliphatic phosphonic acids necessary for commercial use by the addition of an extracting process to the process of manufacturing is that this extracting process involves an additional step with its concomitant increase in cost, both in capital and operating expenses.

More recently, U.S. Pat. No. 4 064 163 describes in detail a process for the manufacture of an aliphatic phosphonic acid, particularly 2-chloroethylphosphonic acid, of the type wherein a diester of the aliphatic phosphonic acid, particularly bis-(2-chloroethyl)-2-chloroethylphosphonate, is reacted with anhydrous hydrogen halide,

particularly hydrogen chloride, to produce a reaction product containing the aliphatic phosphonic acid, and the corresponding aliphatic halides, particularly ethylene dichloride.

In general the process provides:

(a) reacting the diester and the anhydrous hydrogen halide at a first temperature of at least 100°C, at a low pressure and for a first period of time to form a first reaction product;
(b) subsequently reacting the first reaction product and the anhydrous hydrogen halide at a second temperature of at least 100°C, at a high pressure, said high pressure higher than said low pressure, for a second period of time to form a second reaction product; and
(c) removing the aliphatic halides from at least one reaction product.

The process, disclosed in U.S. Patent No. 4 064 163 is particularly related to a process for the manufacture of 2-chloroethylphosphonic acid utilizing the diester bis-(2-chloroethyl)-2-chloroethylphosphonate and wherein the anhydrous hydrogen halide is anhydrous hydrogen chloride. In general, the low pressure should be at least 14 psia and the high pressure at least 20 psia. Preferably, the low pressure is from about 14 psia to about 30 psia and the high pressure is from 30 psia to about 50 psia. In addition, the step of reacting the diester and the anhydrous hydrogen halide and the step of subsequently reacting the first reaction product and the anhydrous hydrogen halide are both accomplished at at least 100°C. Preferably, the first and second temperatures are both from about 140°C to about 160°C. The temperatures should not exceed 200°C. Below 100°C the reaction kinetics are such as to cause the reaction to proceed too slowly, whereas above 200°C product and raw material decomposition interferes with the reactions.

Normally, the first period of time in the first step for the manufacture of 2-chloroethylphosphonic acid in the first step is usually at least about 25 hours and preferably from about 25 to about 35 hours. Further, the second period of time in the process for the manufacture of 2-chloroethylphosphonic acid is until the second reaction product contains a required concentration of at least about 80 % by weight of 2-chloroethylphosphonic acid. The second period of time in the preferred process for the manufacture of 2-chloroethylphosphonic acid is at least about 10 hours. Preferably, however, the reaction time is from about 10 hours to about 16 hours. Commercially acceptable 2-chloroethylphosphonic acid for most agricultural uses is generally considered to have a minimum concentration of 85 by weight of 2-chloroethylphosphonic acid in the second reaction product. This can usually be accomplished within a second period of time of about 13 hours.

As will be discerned from the above, present techniques for producing aliphatic phosphonic acids and particularly 2-chloroethylphosphonic acids require a considerable amount of time in the order of about 35 - 50 hours or more to obtain product purity of at least 90. This is in part mainly attributable to the batch mode of feeding starting materials to the reaction vessel. As a result of the batch mode of feeding of the starting materials, ethylene dichloride which is continuously evolved and discharged from the reaction vessel results in volume shrinkage of the reection zone during the reection period. The volume shrinkage is caused by a decrease in density and evolution of ethylene dichloride. At about 98 % conversion, the final volume is only about 50 % of the original. Thus it will be seen that the reaction vessel is not efficiently utilized for this type reaction.

It is thus an object of this invention to provide a novel process for manufacturing aliphatic phosphonic acids.

Another object of this invention is to provide a process for manufacturing highly pure aliphatic phosphonic acids at a low cost.

Another object of this invention is to provide a novel manufacturing process which is particularly suitable for manufacturing 2-haloethylphosphonic acids, and more particularly 2-chloroethylphosphonic acid.

Still another object of this invention is to provide a novel process which is particularly suitable for manufacturing, 2-haloethylphosphonic acids of highly pure nature under economically reasonable process parameters.

**Brief Description of the Drawings**

| | |
|---|---|
| Figure 1 | is a schematic diagram generally illustrating the process for producing 2-chloroethylphosphonic acid. |
| Figures 2 - 6 | are graphs generally illustrating mole fraction vs. residence time of ETHEPHON product in reactor under indicated conditions. |

**Summary of the Invention**

Broadly contemplated, the present invention provides an improvement in the process for the manufacture of an aliphatic phosphonic acid of the formula:

```
     O  OH
     ||  /
R1–P
       \
        OH
```

of the type wherein a diester of the aliphatic phosphonic acid of the general formula:

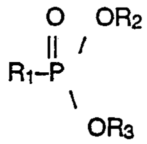

is introduced into a reaction zone with anhydrous hydrogen halide selected from the group consisting of hydrogen chloride, hydrogen bromide, hydrogen iodide and hydrogen fluoride to produce a reaction product containing the corresponding aliphatic phosphonic acid and the corresponding aliphatic halides, wherein $R_1$, $R_2$ and $R_3$ are each independently selected from the group consisting substituted and unsubstituted aryl, alkyl, alkenyl, halo-substituted alkyl and halo-substituted alkenyl, having from 1 to 6 carbon atoms, and wherein the diester and the anhydrous hydrogen halide are reacted for a first period of time to form a first reaction product; and subsequently reacting the first reaction product and the anhydrous hydrogen halide for a second period of time to form at least about 90 % of a second reaction product; the sum of said first period of time and second period of time constituting the total reaction time and wherein aliphatic halides are continuously discharged from at least one reaction product resulting in a decrease in volume of the reaction zone, the improvement comprising continuously adding additional diester of aliphatic phosphonic acid reactant up to about 60 % of the total reaction time, said reactant being added in an amount sufficient such that said reactants and/or products will always be present in said reactor so as to occupy at least 80 % of the reaction zone volume during said reactant addition.

Preferably, $R_1$, $R_2$ and $R_3$ are the same substituents: It is more preferable, that $R_1$, $R_2$ and $R_3$ are the halo-substituted alkyl substituents, particularly 2-chloroethyl substituents.

**Description of the Preferred Embodiments**

This invention particularly relates to a process for the manufacture of 2-chloroethylphosphonic acid utilizing the diester bis-(2-chloroethyl)-2-chloroethylphosphonate and wherein the anhydrous hydrogen halide is anhydrous hydrogen chloride.

As used herein the term "alkyl" represents straight or branched chain saturated hydrocarbons.

The term "alkenyl" represents straight or branched chain aliphatic hydrocarbons containing at least one double bond.

The terms "halo-substituted alkyl" and "halo-substituted alkenyl" include alkyl and alkenyl groups having one or more hydrogens replaced by a halogen which can be bonded to the same or different carbon atoms in the alkyl or alkenyl group.

The term "halo," as used herein, includes all four halogens, namely chlorine, bromine, iodine and fluorine.

The term "aryl," as used herein, includes both mono-and polycyclic aryl substituents, such as phenyl, naphthyl and other condensed ring systems.

As only representative examples of the phosphonic acids, or mixtures thereof, which may be produced by the process of this invention, there may be mentioned the following:

1. vinyl phosphonic acid,
2. 1-chloroethylphosphonic acid,
3. 2-chloroethylphosphonic acid,
4. 1-chloropropylphosphonic acid,
5. 2-chloropropylposphonic acid,
6. 2-chlorobutylphosphonic acid,
7. methylphosphonic acid,
8. ethylphosphonic acid,
9. propylphosphonic acid, and
10. butylphosphonic acid.

As indicated previously this process is particularly designed for the manufacture of 2-chloroethylphosphonic acid, a valuable plant growth regulator used in the agricultural field, however, this invention contemplates a process for the manufacture of any of the aliphatic phosphonic acids encompassed by the general formula above and the use of any of the diesters of the aliphatic phosphonic acid encompassed by the general formula above.

The preferred aliphatic phosphonic acid, 2-chloroethylphosphonic acid, is manufactured by utilizing the diester, bis-(2-chloroethyl)-2-chloroethylphosphonate and, preferably, anhydrous hydrogen chloride. The aliphatic halide produced by this reaction is ethylene dichloride.

However, as noted above 2-chloroethylphosphonic acid may also be manufactured by any of the other anhydrous hydrogen halides. Another preferred anhydrous hydrogen halide is anhydrous hydrogen bromide.

Further, this invention envisions the manufacture of 2-chloroethylphosphonic acid from other diesters, wherein $R_1$ is the 2-chloroethyl substituent.

The general reaction mechanism for producing aliphatic phosphonic acids is described in U.S. Patent 4 064 163 and the production of a representative phosphonic acid, i.e., 2-chloroethylphosphonic acid is illustrated below:

```
(1)     O   OC2H4Cl                                  O   OC2H4CL
        ||  /                                        ||  /
ClC2H4–P                      + HCL  →      ClC2H4–P
                                     ←
         \                                            \
          OC2H4Cl                                      OH

          diester                            half ester + ClC2H4Cl ethylene dichloride


(2)     O   OC2H4Cl                                  O   OH
        ||  /                                        ||  /
ClC2H4–P                      + HCL  →      ClC2H4–P
                                     ←
        \                                             \
         OH                                            OH

       half ester                      2-chloroethylphosphonic acid  +  ClC2H4Cl ethylene dichloride
```

As will be seen from the above, the overall reaction involves a two-step, consecutive, gas-liquid reaction. In general, the reaction is conducted in a reactor equipped with a stirrer or agitator.

The step of (a) reacting the diester and the anhydrous hydrogen halide and the step of (b) subsequently reacting the first reaction product and the anhydrous hydrogen halide in the reactor are both accomplished at at least 100°C. Preferably, the first and second temperatures are both from about 150°C to about 160°C. The temperatures should not exceed 200°C. Below 100°C the reaction kinetics are such as to cause the reaction to proceed too slowly, whereas above 200°C product and raw material decomposition interferes with the reactions.

The total pressure within the reactor can be generally in the order of about 15 to 150 psig. It has been found however that the pressures which are preferred are those within the range of about 40 - 100 psig.

For reactors equipped with agitating means, the agitator tip speed is preferably about 500 - 1000 ft./min.

According to the present invention, the process is generally conducted as follows: A conventional reactor, equipped with heating means and agitating or stirring means is filled with liquid phosphonate of the type previously described to about 80 % of the working volume of the reactor. The liquid phosphonate is then heated to the required temperature about 120 - 180°C, preferably about 150 - 160°C. Anhydrous gaseous hydrogen halide is then sparged through the liquid phosphonate at the required pressures which are maintained throughout the reaction. Generally, the gaseous hydrogen halide flow rate is about 2 to 3 times the stoichiometric need. Under the conventional procedure, as the reaction proceeds, the reaction mass shrinks due to evolution of aliphatic halide which is discharged from the reactor at a yield of product of about 95 %. During production of the product the decrease in volume in the reactor is about 50 % of the original volume. According to the present invention however, this volume shrinkage phenomenon is utilized to increase the production of the final product. Thus, as the volume in the reactor decreases as explained previously, additional phosphonate reactant is added to the reaction zone. In order to obtain maximum gain in reactor productivity, the amount of phosphonate to be added, the starting time and ending time of phosphonate addition are carefully monitored in order to obtain a maximum gain in product reactivity. It has been found that maximum gain in reactor productivity is attained if the additional phosphonate is added up to about 60 % and preferably during the first 50 - 60 % of the total reaction time. Merely as illustrative, if the total reaction time is about 10 hours, the additional phosphonate should be charged to the reactor during about 5 - 6 hours after the reaction has started when conducting the reaction, at the preferred temperatures, pressure, agitator speed and gaseous hydrogen halide flowrate. Generally, the gaseous hydrogen halide sparging is maintained throughout the reaction period with a large excess being used to strip out the aliphatic halide by-product which is discharged from the reactor together with gaseous hydrogen halide and directed to and through a condenser where the liquid aliphatic halide is collected in a condenser accumulator and the non-condensible gaseous hydrogen halide is reacted and neutralized with aqueous rhodium hydroxide.

However, for large scale production, the gaseous hydrogen halide can be compressed for recycle and reuse. The manner of introducing the additional liquid phosphonate after the initial charge is in a continuous mode. Thus, benefits from practice of the invention can be achieved when the liquid phosphonate is added continuously up to about the first 60 % of the total reaction time.

For a more detailed description of the invention and with specific reference to the production of 2-chloroethylphosphonic acid, reference is made to Fig. 1 which shows a schematic diagram of the preferred equipment setup for a 1-gallon (3,78 liter) glass-lined reactor. It should be understood however, that the major features of the setup are applicable to any size of reactor. Therefore, the process of producing 2-chloroethylphosphonic acid (ETHEPHON) in the 2-liter or 1-gallon (3,78 liter) reactor will be essentially similar to a much larger reactor,

except as mentioned previously, the unreacted HCl will be compressed for recycle and reuse.

According to the process, the reactor 10, is filled with liquid bis (2-chloroethyl-2-chloroethyl) phosphonate entering through line 12 to about 80 % of the working volume of the reactor. The reactor is then heated to the preferred temperature of about 150° - 160°C by means of hot oil entering heater jacket 14 through line 16. The hot oil circulates through heater jacket 14 and leaves heater jacket 14 through line 18.

Gaseous hydrogen chloride which is stored in pressurized cylinder 20 is then introduced into reactor 10 through line 22 after it has been purged and blanketed with nitrogen gas fed into line 22, through line 24. The hydrogen chloride is then sparged through the liquid phosphonate as shown by the line 17 at the preferred pressure of approximately 40 - 100 psig (2,75 - 6,9 bar) which pressure is maintained throughout the whole reaction period.

In the conventional mode of operation, as the reaction proceeds, the reaction mass shrinks. The shrinkage is about 50 % of the original volume at approximately 95 % yield.

According to the present invention, however, and when continuous feed of phosphonate is practiced, additional phosphonate is continuously fed to reactor 10 through line 22 and such feeding is continued up to about 50 - 60 % of the total reaction time.

As is known, the by-product in the reaction is ethylene dichloride. The large excess of gaseous hydrochloric acid is utilized to strip out the ethylene dichloride by-product to obtain the maximum space in the reactor for additional phosphonate needed for higher productivity.

Thus, ethylene dichloride vapor and gaseous hydrogen chloride is continuously discharged from reactor 10 through line 26 and passed through gas-liquid separator 25 wherein liquids entrained in or condensed from the ethylene dichloride are returned to reactor 10 through line 27. The ethylene dichloride and hydrogen chloride thereafter enters condenser 28. In condenser 28, liquid ethylene dichloride is formed and is discharged from condenser 28 through line 30 and is introduced into condenser accumulator 32 where it is collected, sampled if necessary, and drained after the test run. .

In the operation illustrated in Fig. 1, the non-condensible gaseous hydrogen chloride can be discharged from condenser accumulator 32 through line 34 and neutralized with sodium hydroxide. For large scale production however, the gaseous hydrogen chloride can be compressed and recycled for reuse.

After the total reaction time, the product in reactor 10 is drawn out through line 36 after about a 90 - 95 % product yield.

For each run, the reaction time, the temperature of reaction, the pressure, the hydrogen chloride flow rate, the agitator speed were monitored. Also at a regular interval during the course of the reaction, a small (liquid phase) sample was withdrawn from the reactor to analyze for the mole percent concentrations of the diester (Bis-2-chloroethyl-2-chloroethyl phosphonate), the monoester (2-chloroethyl hydrogen 2-chloroethyl phosphonate), and the acid (2-chloro-ethylphosphonic acid, or ETHEPHON) by methods well known in the art.

## Examples

The following examples are illustrative of this invention and are not to be considered as limiting.

### Reaction Rates Determination Examples

The first three examples illustrate the effect of operating pressure on the rate of ETHEPHON or acid production at constant temperature (150°C), hydrogen chloride (HCl) flow rate (1600 ml/min), agitator speed (1000 rpm) in the one-gallon glass-lined reactor, all at a batch feed mode with respect to the diester or phosphonate.

### Example 1. Operating Pressure = 30 psig (2,07 bar)

This example indicates how the reaction proceeds when the reaction pressure is maintained throughout the reaction at 30 psig. The reaction was run for 7 hours. After 6 hours, Table 1 shows that the acid concentration was 71.7 mole %. The concentration profiles (Mole % vs time) of the reactant and products are shown in Figure 2.

**Table 1**

ETHEPHON Reaction:

Batch Reactor Data
(1-Gal. (3,78 liter) Reactor)
Temperature = 150°C
Pressure = 30 psig (2.07 bar)
HCl flow - 1600 ml/min
RPM = 1000

| Time (Hr) | Diester | Mole % Mono | Acid |
|---|---|---|---|
| 0.0 | 100 | 0.000 | 0.000 |
| 0.5 | 78.9 | 18.5 | 2.5 |
| 1.0 | 56.3 | 36.1 | 7.52 |
| 1.5 | 32.8 | 52.0 | 15.1 |
| 2.0 | 18.3 | 59.1 | 22.5 |
| 2.5 | 8.06 | 58.9 | 33.0 |
| 3.0 | 3.54 | 54.3 | 42.1 |
| 4.0 | 1.25 | 44.2 | 54.5 |
| 5.0 | 0.488 | 34.5 | 65.0 |
| 6.0 | 0.489 | 27.7 | 71.7 |
| 7.0 | 0.277 | 22.0 | 77.6 |

**Example 2. Operating Pressure = 52.5 psig (3.6 bar)**

This example shows how the reaction proceeds when the reaction pressure is raised to 52.5 psig. (3.6 bar). The reaction was run for 8 hours. Table 2 shows that the acid concentration was 78.3 % and 91.3 % after 6 hours and 8 hours, respectively. The concentration profiles of the reactant and the products are shown in Figure 3.

**Table 2**

ETHEPHON Reaction:

Batch Reactor Data
(1-Gal. (3.78 liter) Reactor)
Temperature = 150°C
Pressure = 52.5 psig
HCl flow = 1600 ml/min.
RPM = 1000

| Time (Hr) | Diester | Mole % Mono | Acid |
|---|---|---|---|
| 0.0 | 100.000 | 0.000 | 0.00 |
| 0.5 | 74.8 | 23.3 | 1.83 |
| 1.0 | 47.1 | 44.1 | 8.68 |
| 1.5 | 27.2 | 55.3 | 17.3 |
| 2.0 | 13.9 | 62.6 | 23.4 |
| 3.0 | 2.16 | 49.6 | 48.2 |
| 4.0 | 0.504 | 33.9 | 65.5 |
| 5.0 | 0.468 | 29.0 | 70.5 |
| 6.0 | 0.232 | 21.4 | 78.3 |
| 7.0 | 0.096 | 13.6 | 86.2 |
| 8.0 | 0.000 | 8.6 | 91.3 |

**Example 3. Operating Pressure = 75 psig (5.17 bar)**

This example illustrates how the reaction proceeds when the reaction pressure is increased further to 75 psig (5.17 bar). The reaction was run for 6.5 hours. Table 3 shows that the acid or ETHEPHON concentration was over 99 % after 6 hours. The concentration profiles of the reactant and the products are shown in Figure 4.

**Table 3**

ETHEPHON Reaction:
Batch Reactor Data
(1-Gal. (3.78 liter) Reactor)
Temperature = 150°C
Pressure = 75 psig (5.17 bar)
HCl flow = 1600 ml/min.
RPM = 1000

| Time (Hr) | Diester | Mole % Mono | Acid |
|---|---|---|---|
| 0.0 | 98.17 | 1.83 | 0.00 |
| 0.5 | 66.46 | 29.68 | 3.83 |
| 1.0 | 36.57 | 49.88 | 13.54 |
| 1.5 | 13.24 | 60.07 | 26.68 |
| 2.0 | 4.65 | 56.56 | 38.78 |
| 3.0 | 0.460 | 31.66 | 67.87 |
| 4.0 | 0.107 | 11.70 | 88.18 |
| 5.0 | 0.068 | 2.91 | 97.01 |
| 6.0 | 0.001 | 0.777 | 99.22 |
| 6.5 | 0.001 | 0.434 | 99.56 |

These first three examples and others like them are used to determine the ETHEPHON synthesis reaction kinetic model. A pseudo-first-order series irreversible reaction model, such as

$\text{Diester} \xrightarrow{k_1} \text{Monoester} \xrightarrow{k_2}$ Acid seems to fit the data very well. The concentrationtime profiles of the three main components can then be written as follows:

(1) $[\text{Diester}]_t = \exp(-k_1 t)$

(2) $[\text{Monoester}]_t = \frac{k_1}{k_2 - k_1}[\exp(-k_1 t) - \exp(-k_2 t)]$

(3) $[\text{Acid}]_t = 1 - [\text{Diester}]_t - [\text{Monoester}]_t$

Where in:

$[\text{Acid}]_t$ = the acid or ETHEPHON concentration at time, t, mole fraction.
$[\text{Diester}]_t$ = the diester or phosphonate concentration at time, t, mole fraction.
$[\text{Monoester}]_t$ = the monoester or half ester concentration at time, t, mole fraction.
$k_1$ = the first order (lumped-parameter) rate constant for the conversion of diester to monoester, $\text{Hour}^{-1}$.
$k_2$ = the first order (lumped-parameter) rate constant for the conversion of monoester to acid, $\text{Hour}^{-1}$.
t = reaction time, Hour.

The reaction rate constants, $k_1$ and $k_2$ are correlated as follows:

(4) $k_1 = \exp(-6.59 - 1.13\ 1n(T) + 0.534\ 1n(P) + 1.02\ 1n(F) + 0.337\ 1n(RPM)$

(5) $k_2 = \exp(-20.7 + 2.05\ 1n(T) + 0.611\ 1n(P) + 0.550\ 1n(F) + 0.399\ 1n(RPM)$

Wherein:

F = HCl flow rate, ml/minute (STP)
P = reaction pressure, psia
RPM = agitator speed, rpm
T = reaction temperature, °C.
(Only applied in temperature range of 150 - 160°C)

Examples 4 - 6 illustrate the impact of the manner of introducing the diester or phosphonate on the acid or ETHEPHON productivity, Φ, expressed as grams of acid or ETHEPHON produced per (reaction) hour per liter of reactor volume occupied by the diester initially. The reaction conditions for Examples 4 - 6 are identical:
Reaction temperature, T = 150°C
Reaction pressure, P = 75 psig (5.17 bar)
HCl flow rate - 1600 ml/minute
Stirring rate = well agitated.

**Example 4. Batch Phosphonate Feeding Mode**

This example illustrates the production of acid or ETHEPHON the batch phosphonate feeding mode. This is to mean that after a known amount of diester or phosphonate has been charged into the reactor at the beginning of the reaction, no further diester is added throughout the reaction period. Table 4 shows the data obtained (or calculated using the kinetic rate constants previously described), and Figure 5 depicts the concentration profiles of the diester, monoester and the acid for this example.

**Table 4**

ETHEPHON Reaction:

Batch Reactor Data
(1-Gal. (3.78 liter) Reactor)
Temperature = 150°C
Pressure = 75 psig (5.17 bar)
HCl flow = 1600 ml/min
RPM = 1000

| Time (Hr) | Diester | Mole % Mono | Acid | Cumulative Phosphonate Added,mls. |
|---|---|---|---|---|
| 0.0 | 98.170 | 1.830 | 0.000 | 3200 |
| 0.5 | 66.467 | 29.682 | 3.851 | 3200 |
| 1.0 | 36.577 | 49.883 | 13.540 | 3200 |
| 1.5 | 13.241 | 60.077 | 26.682 | 3200 |
| 2.0 | 4.658 | 56.562 | 38.780 | 3200 |
| 3.0 | 0.460 | 31.664 | 67.876 | 3200 |
| 4.0 | 0.107 | 11.706 | 88.187 | 3200 |
| 5.0 | 0.068 | 2.912 | 97.019 | 3200 |
| 6.0 | 0.001 | 0.777 | 99.222 | 3200 |
| 6.5 | 0.001 | 0.434 | 99.566 | 3200 |

From these data, the ETHEPHON productivity, calculated is 123 gms/hr/1. Where Φ is calculated by the following formula:

$$\Phi = V_f \times \rho L \times \frac{(MW)e}{(MW)p} \times [ACID]_f \times \frac{1}{\tau} \times \frac{1}{V_R}$$

wherein:

| | |
|---|---|
| $[Acid]_f$ = | the concentration of acid or ETHEPHON at end of reaction. |
| $V_f$ = | the total volume of phosphonate added, ml. |
| $V_R$ = | the volume at the beginning of reaction, liters (in 1-Gal. reactor VR = 3. 785 liters). |
| ρL = | density of phosphonate, g/ml ρL = 1.40). |
| (MW)e = | molecular weight of 2-chloroethylphosphonic acid (ETHEPHON) = 144. |
| (MW)p = | molecular weight of bis-(2-chloroethyl)-2-chloroethyl phosphonate(phosphonate) = 269.5. |
| τ = | reaction time, defined as time required to reduce the monoester concentration to equal to or less than 3 (mole) %, hrs. (For example 4, τ = 5 hrs, monoester concentration is 2.912 mole %, the acid or ETHEPHON concentration is 97.019 mole %.). |

**Example 5. Continuous Phosphonate Feeding Mode**

This example illustrates the production of acid or ETHEPHON by the continuous phosphonate or diester feeding mode. In this mode of operation, additional phosphonate is continuously added (by pumping) to the reactor after the initial phosphonate charge has been made. As mentioned previously, this is made possible due to the shrinkage in volume as the ethylene dichloride (EDC) formed is immediately stripped out by the excess HCl as the reaction proceeds to completion. Therefore, the addition of phosphonate was guided by the amount of ethylene dichloride collected in the condenser accumulator 32 as shown in Figures 1. As will be fully explained later, the maximum ETHEPHON productivity is obtained when the addition of phosphonate is continued through approximately the first one-third (1/3) of the reaction cycle. Table 5 shows the important data, and Figure 6 depicts the concentration profiles of the diester, monoester and the acid for this example. From these data, the ETHEPHON "productivity, Φ, calculated is 136 gms/hr/l.

**Table 5**

ETHEPHON Reaction:

Batch Reactor Data
(1-Gal. (3.78 liter) Reactor)
Continuous phosphonate Addition
Temperature = 150°C
Pressure = 75 psig (5.17 bar)
HCl flow = 1600 ml/min
RPM = 1000

| Time (Hr) | Diester | Mole % Mono | Acid | Cumulative Phosphonate Added, mls. |
|---|---|---|---|---|
| 0.0 | 98.529 | 1.471 | 0.000 | 3200 |
| 0.5 | 64.932 | 30.900 | 4.168 | 3200 |
| 1.0 | 34.584 | 52.143 | 13.273 | 3200 |
| 1.5 | 11.469 | 60.048 | 28.484 | 3200 |
| 2.0 | 11.748 | 51.948 | 36.303 | 3780 |
| 3.0 | 10.692 | 46.232 | 43.077 | 4960 |
| 4.0 | 10.191 | 43.705 | 46.103 | 6620 |
| 5.0 | 3.929 | 42.011 | 54.060 | 6620 |
| 6.0 | 0.549 | 28.863 | 70.589 | 6620 |
| 7.0 | 0.109 | 16.097 | 83.794 | 6620 |
| 8.0 | 0.000 | 7.195 | 92.805 | 6620 |
| 9.0 | 0.000 | 3.201 | 96.799 | 6620 |
| 9.3 | 0.000 | 2.88 | 97.09 | 6620 |

**Example 6 . Intermittent Phosphonate Feed Mode**

This example illustrates the production of ETHEPHON by the intermittent phosphonate feeding mode (this is a variation of the continuous addition mode in order to increase productivity). In this mode of operation, additional quantity of phosphonate is added at some predetermined elapsed time from the initial phosphonate addition time to bring back the volume of the reaction mass to its initial volume. The amount added would again be guided by the amount of ethylene dichloride collected in the condenser accumulator during the elapsed time. This process can be repeated as many times as desired. The optimum number of additional phosphonate charges and the time interval between additions depends on the operating pressure, temperature, etc. In the present example, two additional phosphonate charges were used: one after 2 hours and the other after 4 hours. The pertinent data are tabulated in Table 6, and the concentration profiles are depicted in Figure 7. The ETHEPHON productivity, Φ, for this example is calculated to be 133 gms/hr/l.

**Table 6**

ETHEPHON Reaction:
Batch Reactor Data
(1-Gal. (3.78) Reactor)
With Intermittent Phosphonate
Addition Temperature = 150°C
Pressure = 75 psig (5.17 bar)
HCl flow = 1600 ml/min
RPM = 1000

| Time (Hr) | Diester | Mole % Mono | Acid | Cumulative Phosphonate Added, mls. |
|---|---|---|---|---|
| 0.0 | 100.000 | 0.000 | 0.000 | 3200 |
| 1.5 | 16.075 | 60.971 | 22.954 | 3200 |
| 2.0 | 18.289 | 49.634 | 32.077 | 4900 |
| 2.5 | 18.668 | 52.578 | 28.754 | 4900 |
| 3.0 | 8.672 | 54.552 | 36.776 | 4900 |
| 3.5 | 3.844 | 50.420 | 45.736 | 4900 |
| 4.0 | 20.414 | 41.661 | 37.925 | 6600 |
| 4.5 | 12.496 | 47.383 | 40.122 | 6600 |
| 4.8 | 6.488 | 48.570 | 44.943 | 6600 |
| 5.5 | 2.611 | 43.552 | 53.838 | 6600 |

**Table 6 (cont)**

| Time (Hr) | Diester | Mole % Mono | Acid | Cumulative Phosphonate Added, mls. |
|---|---|---|---|---|
| 6.0 | 0.963 | 36.014 | 63.023 | 6600 |
| 6.5 | 0.300 | 27.028 | 72.672 | 6600 |
| 7.5 | 0.000 | 12.712 | 87.288 | 6600 |
| 8.5 | 0.000 | 5.188 | 94.812 | 6600 |
| 9.0 | 0.000 | 3.854 | 96.146 | 6600 |
| 9.5 | 0.000 | 2.55 | 97.42 | 6600 |

It is obvious from examples 4, 5 and 6 that either the continuous mode or the intermittent mode of phosphonate addition gives 8 higher ETHEPHON productivity than the purely batch mode. However, it is time-consuming to determine experimentally the maximum ETHEPHON productivity for both the continuous and the intermittent mode of feeding the phosphonate. Thus, a computer program was written to simulate the ETHEPHON synthesis reactions.

After ensuring the validity of the computer model with experimental results, a series of calculations were carried out using this computer model to determine the relative merits of the three different modes of adding phosphonate to the reactor as well as to optimize each mode of phosphonate addition in order to maximize the ETHEPHON productivity for a given size of reactor. Fixed values for the rate coefficients for the two reaction steps ($k_1$ and $k_2$) of 1.10 and 0.55 reciprocal hours, respectively, were used. These were calculated from Equations (4) and (5), respectively, using the same operating conditions as given for Examples 4, 5, and 6, i.e., temperature of 150°C, pressure of 75 psig (5.17 bar), HCl flow rate of 1600 ml/hr., and the agitator speed of 1000 rpm. In determining the ETHEPHON productivity, $\Phi$, of each operating or phosphonate addition scheme, it was assumed that:

(1) When phosphonate is added, it is added to the original reactor volume occupied by the initial phosphonate charge (which is assumed to occupy 80 - 85 % of the total reactor's working volume).
(2) The reaction is completed when the monoester concentration drops to 0.03 mole fraction.

On these bases, the ETHEPHON productivity, $\Phi$, was calculated in grams of ETHEPHON produced per working volume. The results are tabulated in Table 7.

**Table 7**

COMPARATIVE ETHEPHON PRODUCTIVITY

| Case | Mode | Phosphonate Addition Scheme | $\tau$, Total Reaction Time, Hrs. | ETHEPHON Productivity $\Phi$, gm/l/hr | Relative ETHEPHON Productivity |
|---|---|---|---|---|---|
| 1 | Batch | Initial charge only | 7.61 | 8.25 | 1.0 |
| 2 | Continous | Add phosphonate continuously thru end of reaction | 11.2 | 112 | 1.36 |
| 3 | Continous | Add phosphonate continuously for first 2.8 hrs (1/3 of $\tau$) | 8.23 | 122 | 1.48 |
| 4 | Continous | Add phosphonate continuously for 1st 5.6 hrs (60 % of $\tau$) | 9.29 | 125 | 1.52 |
| 5 | Continous | Add phosphonate continuously for first 8.4 hrs (or 80 % of $\tau$) | 10.4 | 118 | 4.43 |
| 6 | Intermittent | One addition of phosphonate at 2.5 hrs after reaction starts | 8.71 | 101 | 1.22 |
| 7 | Intermittent | Two additions of phosphonate at 1.5 and 3.5 hrs after reaction starts | 9.01 | 109 | 1.32 |
| 8 | Intermittent | Three additions of phosphonate at 1.5, 3, and 4.5 hours after reaction starts | 9.4 | 112 | 1.36 |

Examination of Table 7 clearly indicates the following:

(1) The continuous mode of adding phosphonate (after the initial charge) gives the 5 highest ETHEPHON productivity. For example, the best of the continuous mode gives approximately a 50 % and a 12 % higher Φ than the batch mode and the "best" of the intermittent mode of phosphonate addition, respectively. In the continuous mode of operation, even though the overall reaction time is greater, the reactor volume is more fully utilized to convert phosphonate to ETHEPHON to yield a higher ETHEPHON productivity.
(2) Within the continuous mode of operation, it is better (yielding the highest Φ) to continuously add phosphonate through only the first 60 % of the reaction time, rather than through the total reaction time. This is because the second reaction, i.e., the conversion of monoester to ETHEPHON, is slower than the first reaction - the conversion of phosphonate to monoester. Therefore, the phosphonate added in the latter part of the reaction cycle takes proportionally a longer time to be converted to ETHEPHON, thereby lowering the Φ, the ETHEPHON productivity.
(3) Within the intermittent mode of operation, it is better (yielding higher Φ) to have more phosphonate additions. Again, the reason is that the higher the frequency of addition, the quicker it approaches the continuous mode of operation.

**Claims**

1. An improvement in the process for the manufacture of an aliphatic phosphonic acid of the formula:

```
       O   OH
       ||  /
R1 - P
         \
          OH
```

of the type wherein 8 diester of the aliphatic phosphonic acid of the general formula:

```
       O   OR2
       ||  /
R1 - P
         \
          OR3
```

is introduced into a reaction zone with anhydrous hydrogen halide selected from the group consisting of hydrogen chloride, hydrogen bromide, hydrogen iodide and hydrogen fluoride to produce a reaction product containing the corresponding aliphatic phosphonic acid and the corresponding aliphatic halides, wherein $R_1$, $R_2$, and $R_3$ are each independently selected-from the group consisting of substituted and unsubstituted aryl, alkyl, alkenyl, halosubstituted alkyl and halosubstituted alkenyl, having from 1 to 6 carbon atoms, and wherein the diester and the anhydrous hydrogen halide are reacted for a first period of time to form a first reaction product; and subsequently reacting the first reaction product end the anhydrous hydrogen halide for a second period of time to form at least about 90 percent of a second reaction product; the sum of said first period of time and second period of time constituting the total reaction time and wherein aliphatic halides are continuously discharged from at least one reaction product resulting in a decrease in volume of the reaction zone, the improvement comprising maintaining the reaction zone volume at about 80 to 95 percent capacity of reactants and/or products by continuously adding additional diester of aliphatic phosphonic acid reactant up to about 60 percent of the total reaction time said reactant being added in an amount sufficient such that said reactants and/or products will always be present in said reactor so as to occupy at least 80 percent of the reaction zone volume during said reactant addition.

2. The process of claim 1, wherein $R_1$, $R_2$, and $R_3$ are the same.

3. The process of claim 1, wherein $R_1$, $R_2$ and $R_3$ are the same halo-substituted alkyl.

4. The process of claim 1, wherein the aliphatic phosphonic acid is 2-chloroethylphosphonic acid.

5. The process of claim 4, wherein the diester is bis(2-chloroethyl)-2-chloroethyl phosphonate.

6. The process of claim 1, wherein the anhydrous hydrogen halide is anhydrous hydrogen chloride.

7. The process of claim 6, wherein the aliphatic halides are ethylene dichloride.

8. The process of claim 1, wherein:

a) The aliphatic phosphonic acid is 2-chloroethylphosphonic acid;
b) The diester is 5 bis(2-chloroethyl)-2-chloroethyl phosphonate;

c) The anhydrous hydrogen halide is anhydrous hydrogen chloride; and
d) The aliphatic halides are ethylene dichloride.

9. A process according to claim 1 wherein said aliphatic halides removed from said reaction zone is passed through gas-liquid separation means and liquids entrained in or condensed from said aliphatic halide is returned to said reaction zone.

10. A process according to claim 1 wherein said additional diester of aliphatic phosphonic acid reactant is continuously added up to about 50 to about 60 percent of the total reaction time.

11. A process according to claim 1 wherein the flow rate of said anhydrous hydrogen halide is about 2 to 3 times the stoichiometric need.

12. A process according to claim 1 wherein the temperature within said reactor is at least about 100°C.

13. A process according to claim 1 wherein the temperature within said reactor is at least about 150°C to about 160°C.

14. A process according to claim 1 wherein the total pressure in the reaction zone is about 15 to about 150 psig (about 1.03 bar to about 10.34 bar).

15. A process for the production of 2-chloroethyl phosphonic acid which comprises:

a) introducing anhydrous hydrochloric acid and bis 2-chloroethyl ester of 2-chloroethyl phosphonic acid into a reaction zone in amounts sufficient to occupy at least 80 percent volume of said reaction zone under conditions of temperature and pressure such that said ester will undergo a two-stage saponification reaction with said anhydrous hydrochloric acid to produce the desired product, 2-chloroethyl phosphonic acid and dichloroethylene as the principal by-product;
b) continuously removing said dichloroethylene from said reaction zone; and
c) continuously adding up to 60 percent of the total reaction time, additional amounts of said ester to said reaction zone sufficient to maintain the total volume of all reactants and products within said reaction zone at a level of at least 80 percent of the total volume of said reaction zone during said continuous addition of said ester.

16. A process according to claim 15 wherein said dichloroethylene removed from said reaction zone is passed through gas-liquid separation means and liquids entrained in or condensed from said ethylene dichloride are returned to the said reaction zone.

17. A process according to claim 15 wherein said additional amounts of said ester is continuously added up to about 50 to about 60 percent of the total reaction time.

18. A process according to claim 15 wherein the flow rate of said anhydrous hydrochloric acid is about 2 to 3 times the stoichiometric need.

19. A process according to claim 15 wherein the temperature within said reaction zone is at least about 100°C.

20. A process according to claim 15 wherein the temperatures within said reaction zone is at least about 150°C to about 160°C.

21. A process according to claim 15 wherein the total pressure in the reaction zone is about 15 to about 150 psig (about 1.03 bar to about 10.34 bar).

22. A process according to claim 15 wherein the total pressure in the reaction zone is about 40 to about 100 psig (about 2.75 to about 6.9 bar).

**Patentansprüche**

1. Verbesserung des Verfahrens zur Herstellung einer aliphatischen Phosphonsäure der Formel

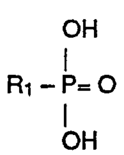

bei dem ein Diester der aliphatischen Phosphonsäure der allgemeinen Formel

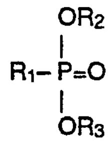

zusammen mit einem wasserfreien Halogenwasserstoff, gewählt aus der Gruppe Chlorwasserstoff, Bromwasserstoff, Iodwasserstoff und Fluorwasserstoff, in eine Reaktionszone gebracht wird, wobei ein Reaktionsprodukt entsteht, das die entsprechende aliphatische Phosphonsäure und die entsprechenden aliphatischen Halogenide enthält, worin $R_1$, $R_2$ und $R_3$ jeweils unabhängig aus der Gruppe, bestehend aus subtituierten und unsubstituierten Aryl-, Alkyl-, Alkenyl-halogensubstituierten Alkyl- und halogensubstituierten Alkenylgruppen mit 1 - 6 Kohlenstoffatomen, gewählt werden und worin der Diester und der wasserfreie Halogenwasserstoff in einem ersten Zeitabschnitt zu einem ersten Reaktionsprodukt umgesetzt werden und anschließend das erste Reaktionsprodukt mit dem wasserfreien Halogenwasserstoff in einem zweiten Zeitabschnitt zu mindestens etwa 90 % eines zweiten Reaktionsprodukts umgesetzt wird; dabei stellt die Summe des genannten ersten Zeitabschnitts und des zweiten Zeitabschnitts die gesamte Reaktionszeit dar, wobei die aliphatischen Halogenide aus mindestens einem der Reaktionsprodukte kontinuierlich ausgetragen werden, was zu einer Volumenabnahme der Reaktionszone führt, wobei die Verbesserung darin besteht, das Volumen der Reaktionszone bei etwa 80 bis 95 % des Gesamtvolumens der Reaktanten und/oder Produkte zu halten, indem kontinuierlich weiterer Diester der aliphatischen Phosphonsäure als Reaktant während bis zu 60 % der gesamten Reaktionszeit zugegeben wird, wobei der genannte Reaktant in einer Menge zugegeben wird, die ausreicht, daß die genannten Reaktanten und/oder Produkte im genannten Reaktor immer in einer Menge vorhanden sind, die mindestens 80 % des Volumens der Reaktionszone während der genannten Zugabe des Reaktanten ausfüllt.

2. Verfahren gemäß Anspruch 1 worin $R_1$, $R_2$ und $R_3$ gleich sind.

3. Verfahren gemäß Anspruch 1, worin $R_1$, $R_2$ und $R_3$ das gleiche Halogenalkyl sind.

4. Verfahren gemäß Anspruch 1 worin die aliphatische Phosphonsäure 2-Chlorethylphosphonsäure ist.

5. Verfahren gemäß Anspruch 4, worin der Diester Bis-(2-chlorethyl)-2-chlorethylphosphonat ist.

6. Verfahren gemäß Anspruch 1 worin der wasserfreie Halogenwasserstoff wasserfreir Chlorwasserstoff ist.

7. Verfahren gemäß Anspruch 6, worin die aliphatischen Halogenide Ethylenchlorid sind.

8. Verfahren gemäß Anspruch 1, worin

a) die aliphatische Phosphonsäure 2-Chlorethylphosphonsäure ist;
b) der Diester Bis-(2-chlorethyl) -2-chlorethylphosphonat ist;
c) der wasserfreie halogenwasserstoff wasserfreier Chlorwasserstoff ist;
d) die aliphatischen Halogenide Ethylenchlorid sind.

9. Verfahren gemäß Anspruch 1, worin die genannten aliphatischen Halogenide, die aus der genannten Reaktionzone entfernt werden, durch eine Gas-Flüssigkeits-Trennvorrichtung geleitet werden und die im genannten aliphatischen Halogenid mitgeschleppten oder daraus kondensierten Flüssigkeiten in die genannte Reaktionszone zurückgeführt werden.

10. Verfahren gemäß Anspruch 1, worin der genannte zusätzliche Diester der aliphatischen Phosphonsäure als Reaktant kontinuierlich bis zu etwa 50 - 60 % der Gesamtreaktionszeit zugegeben wird.

11. Verfahren gemäß Anspruch 1, worin die Fließgeschwindigkeit das genannten wasserfreien Halogenwasserstoffs etwa das Zwei- bis Dreifache des stöchiometrischen Bedarfs beträgt.

12. Verfahren gemäß Anspruch 1, worin die Temperatur in dem genannten Reaktor etwa mindestens 100°C beträgt.

13. Verfahren gemäß Anspruch 1, worin die Temperatur in dem genannten Reaktor mindestens etwa 150 - 160°C beträgt.

14. Verfahren gemäß Anspruch 1, worin der Gesamtdruck in der Reaktionszone zwischen etwa 15 und etwa 150 psig betragt (zwischen etwa 1,03 bar und etwa 10,34 bar).

15. Verfahren zur Herstellung von 2-Chlorethylphosphonsäure, bestehend in

a) Einleitung von wasserfreiem Chlowasserstoff und 2-Chlorethylphosphonsäure-bis-(2-chlorethylester) in eine Reaktionszone in Mengen, die mindestens 80 % des Volumens der genannten Reaktionszone unter Temperatur- und Druckbedingungen ausfüllen, unter denen der genannte Ester einer zweistufigen Verseifung mit dem genannten

wasserfreien Chlorwasserstoff zu dem gewünschten Produkt 2-Chlorethylphosphonsäure und Ethylenchlorid als wichtigstes Nebenprodukt unterliegt;

b) kontinuierlicher Entfernung des genannten Ethylenchlorids aus der genannten Reaktionszone und

c) kontinuierlicher Zugabe über bis zu 60 % der Gesamtreaktions zeit von zusätzlichen Mengen des genannten Esters in die genannte Reaktionszone, so daß das Gesamtvolumen aller Reaktanten und Produkte in der genannten Reaktionszone während der genannten kontinuierlichen Zugabe des genannten Esters auf einem Niveau von mindestens 80 % des Gesamtvolumens der genannten Reaktionszone gehalten wird.

16. Verfahren gemäß Anspruch 15, worin das genannte Ethylenchlorid, das aus der genannten Reaktionszone ausgetragen wird, durch eine Gas-Flüssigkeits-Trennvorrichtung geleitet wird und die in dem genannten Ethylenchlorid mitgeschleppten oder aus ihm kondensierten Flussigkeiten in die genannte Reaktionszone zurückgeführt werden.

17. Verfahren gemäß Anspruch 15, worin die genannten zusätzlichen Mengen des genannten Esters bis zu etwa 50 - 60 % der Gesamtreaktionszeit kontinuierlich zugegeben werden.

18. Verfahren gemäß Anspruch 15, worin die Fließgeschwindigkeit des genannten wasserfreien Chlorwasserstoffs etwa dem Zwei- bis Dreifachen des stöchiometrischen Bedarfs entspritcht.

19. Verfahren gemäß Anspruch 15, worin die Temperatur in der genannten Reaktionszone mindestens etwa 100°C beträngt.

20. Verfahren gemäß Anspruch 15, worin die Temperatur in der genannten Reaktionszone mindestens etwa 150 - 160°C beträgt.

21. Verfahren gemäß Anspruch 15, worin der Gesamtdruck in der Reaktionszone etwa 15 bis etwa 150 psig beträgt (etwa 1,03 bar bis etwa 10,34 bar).

22. Verfahren gemäß Anspruch 16, worin der Gesamtdruck in der Reaktionszone etwa 40 bis etwa 100 psig beträgt (etwa 2,75 bis etwa 6,9 bar).

**Revendications**

1. Procédé perfectionné de production d'un acide phosphonique aliphatique de formule:

```
     O  OH
     || /
R1 - P
      \
       OH
```

du type dans lequel un diester d'un acide phosphonique aliphatique de formule générale:

```
     O  OR2
     || /
R1 - P
      \
       OR3
```

est introduit dans une zone de réaction avec un halogénure d'hydrogène anhydre choisi dans le groupe comprenant le chlorure d'hydrogène, le bromure d'hydrogène, l'iodure d'hydrogène et le fluorure d'hydrogène pour former un produit de réaction contenant l'acide phosphonique aliphatique correspondant et les halogénures aliphatiques correspondants, formules dans lesquelles $R_1$, $R_2$ et $R_3$ sont choisis chacun, indépendamment, dans le groupe comprenant des radicaux aryle, alkyle, alcényle substitués et non substitués, halogénalkyle et halogénalcényle ayant 1 à 6 atomes de carbone, et dans lequel le diester et l'halogénure d'hydrogène anhydre sont maintenus en réaction pendant une première période de temps pour former un premier produit de réaction; et le premier produit de réaction et l'halogénure d'hydrogène anhydre sont ensuite amenés à réagir pendant une seconde période de temps pour former au moins environ 90 % d'un second produit de réaction; la somme de la première et de la seconde période de temps constituant la durée totale de réaction, et des halogénures aliphatiques sont continuellement éliminés d'au moins un produit de réaction, ce qui entraîne une réduction de volume de la zone de réaction, le perfectionnement consistant à maintenir le volume de la zone de réaction à une capacité d'environ 80 à 95 % de corps réactionnels et/ou de produits par l'addition continue d'une quantité supplémentaire de diester d'acide phosphonique aliphatique réactionnel jusqu'à environ 60 % de la durée totale de réaction, ledit corps réactionnel étant ajouté en une quantité suffisante pour que les corps réactionnels et/ou les produits soient toujours présents dans ledit réacteur de manière à occuper au moins 80 % du volume de la zone de réaction pendant ladite addition du corps réactionnel.

2. Procédé suivant la revendication 1, dans lequel $R_1$, $R_2$ et $R_3$ sont identiques.

3. Procédé suivant la revendication 1, dans lequel $R_1$, $R_2$ et $R_3$ représentent le même halogénalkyle.

4. Procédé suivant la revendication 1, dans lequel l'acide phosphonique aliphatique est l'acide 2chloréthylphosphonique.

5. Procédé suivant la revendication 4, dans lequel le diester est le 2-chloréthylphosphonate de bis-(2-chloréthyle).

6. Procédé suivant la revendication 1, dans lequel l'halogénure d'hydrogène anhydre est le chlorure d'hydrogène anhydre.

7. Procédé suivant la revendication 6, dans lequel les halogénures aliphatiques consistent en dichloréthylène.

8. Procédé suivant la revendication 1, dans lequel:

a) l'acide phosphonique aliphatique est l'acide 2-chloréthylphosphonique;
b) le diester est le 2-chloréthylphosphonate de bis-(2-chloréthyle);
c) l'halogénure d'hydrogène anhydre est le chlorure d'hydrogène anhydre; et
d) les halogénures aliphatiques consistent en dichloréthylène.

9. Procédé suivant la revendication 1, dans lequel les halogénures aliphatiques enlevés de la zone de réaction sont transférés dans un système de séparation gazliquide et le liquide entraîne dans l'halogénure aliphatique ou condensé de l'halogénure aliphatique est recyclé dans la zone de réaction.

10. Procédé suivant la revendication 1, dans lequel la quantité additionnelle de diester d'acide phosphonique aliphatique réactionnel est continuellement ajoutée jusqu'à environ 50 - 60 % de la durée totale de réaction.

11. Procédé suivant la revendication 1, dans lequel le débit de l'halogénure d'hydrogène anhydre est égal à environ 2 à 3 fois les besoins stoechiométriques.

12. Procédé suivant la revendication 1, dans lequel la température dans le réacteur est d'au moins environ 100°C.

13. Procédé suivant la revendication 1, dans lequel la température dans le réacteur est d'au moins environ 150 à environ 160°C.

14. Procédé suivant la revendication 1, dans lequel la pression manométrique totale dans la zone de réaction est d'environ 15 à environ 150 $lb/in^2$ (environ 1,03 à environ 10,34 bars).

15. Procédé de production d'acide 2-chloréthylphosphonique, qui consiste:

a) à introduire de l'acide chlorhydrique anhydre et de l'ester de bis-(2-chloréthyle) d'acide 2-chloréthylphosphonique dans une zone de réaction en quantités suffisantes pour occuper au moins 80 % du volume de ladite zone de réaction dans des conditions de température et de pression choisies de manière que ledit ester subisse une réaction de saponification en deux étapes avec l'acide chlorhydrique anhydre de manière à former le produit désiré, à savoir l'acide 2-chloréthylphosphonique et du dichloréthylène comme principal sous-produit;
b) à éliminer en continu le dichloréthylène de ladite zone de réaction; et
c) à ajouter en continu pendant une durée allant jusqu'à 60 % de la durée totale de réaction, des quantités complémentaires dudit ester dans la zone de réaction, suffisantes pour maintenir le volume total de tous les corps réactionnels et des produits dans ladite zone de réaction à un niveau d'au moins 80 % du volume total de ladite zone de réaction pendant l'addition continue de l'ester.

16. Procédé suivant la revendication 15, dans lequel le dichloréthylène éliminé de la zone de réaction est transféré dans un dispositif de séparation gaz-liquide et le liquide entraîne dans le dichloréthylène ou séparé de ce dernier par condensation est recyclé dans la zone de réaction.

17. Procédé suivant la revendication 15, dans lequel les quantités complémentaires d'ester sont ajoutées en continu jusqu'à environ 50 - 60 % de la durée totale de réaction.

18. Procédé suivant la revendication 15, dans lequel le débit de l'acide chlorhydrique anhydre représente environ 2 à 3 fois les besoins stoechiométriques.

19. Procédé suivant la revendication 15, dans lequel la température dans la zone de réaction est d'au moins environ 100°C.

20. Procédé suivant la revendication 15, dans lequel la température dans la zone de réaction est d'au moins environ 150 à environ 160°C.

21. Procédé suivant la revendication 15, dans lequel la pression manométrique totale dans la zone de réaction est d'environ 15 à environ 150 $lb/in^2$ (environ 1,03 à environ 10,34 bars).

22. Procédé suivant la revendication 15, dans lequel la pression manométrique totale dans la zone de réaction est d'environ 40 à environ 100 $lb/in^2$ (environ 2,75 à environ 6,9 bars).

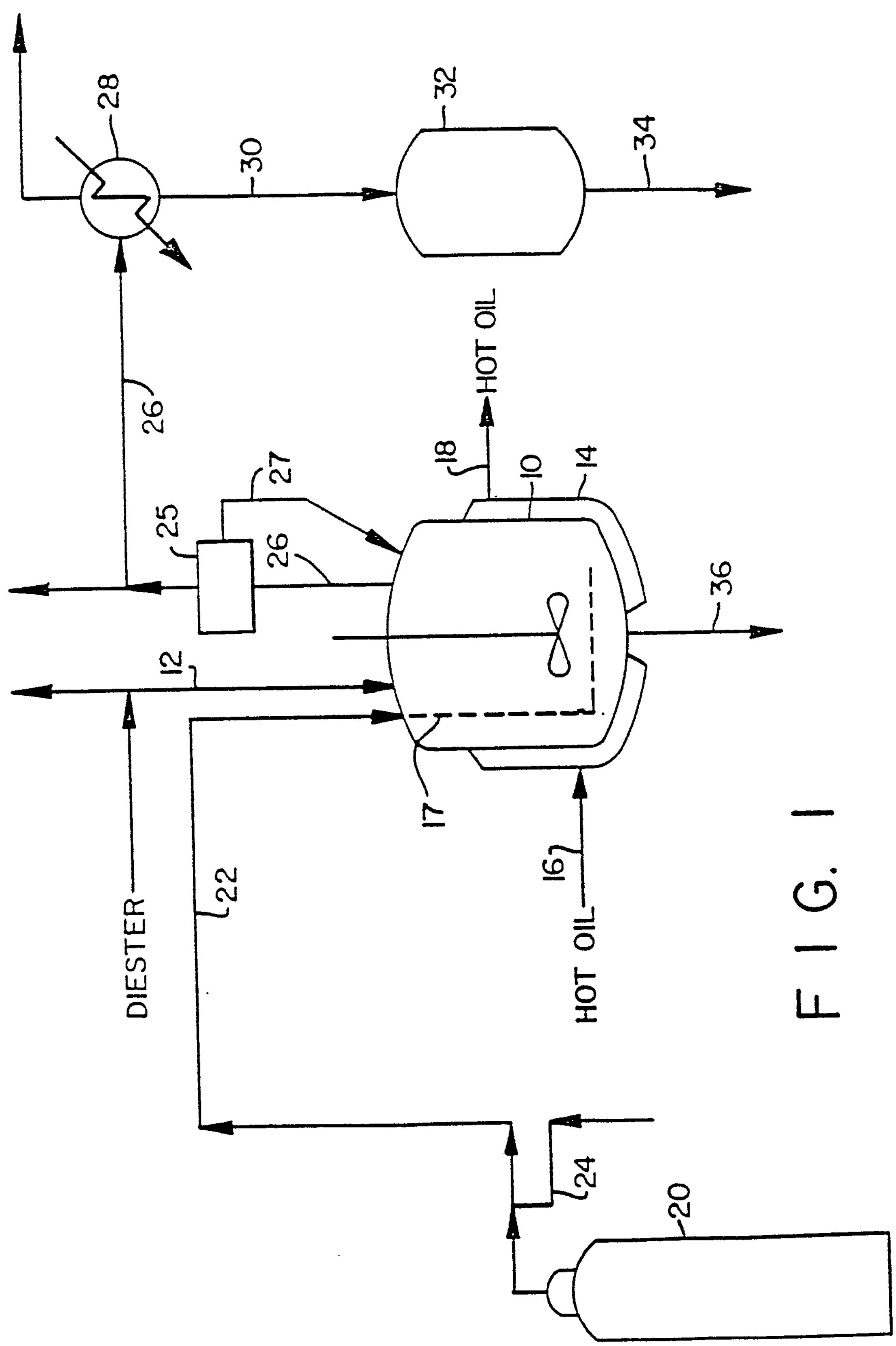

HOT OIL
HOT OIL
DIESTER
10
12
14
16
17
18
20
22
24
25
26
26
27
28
30
32
34
36


FIG. 1

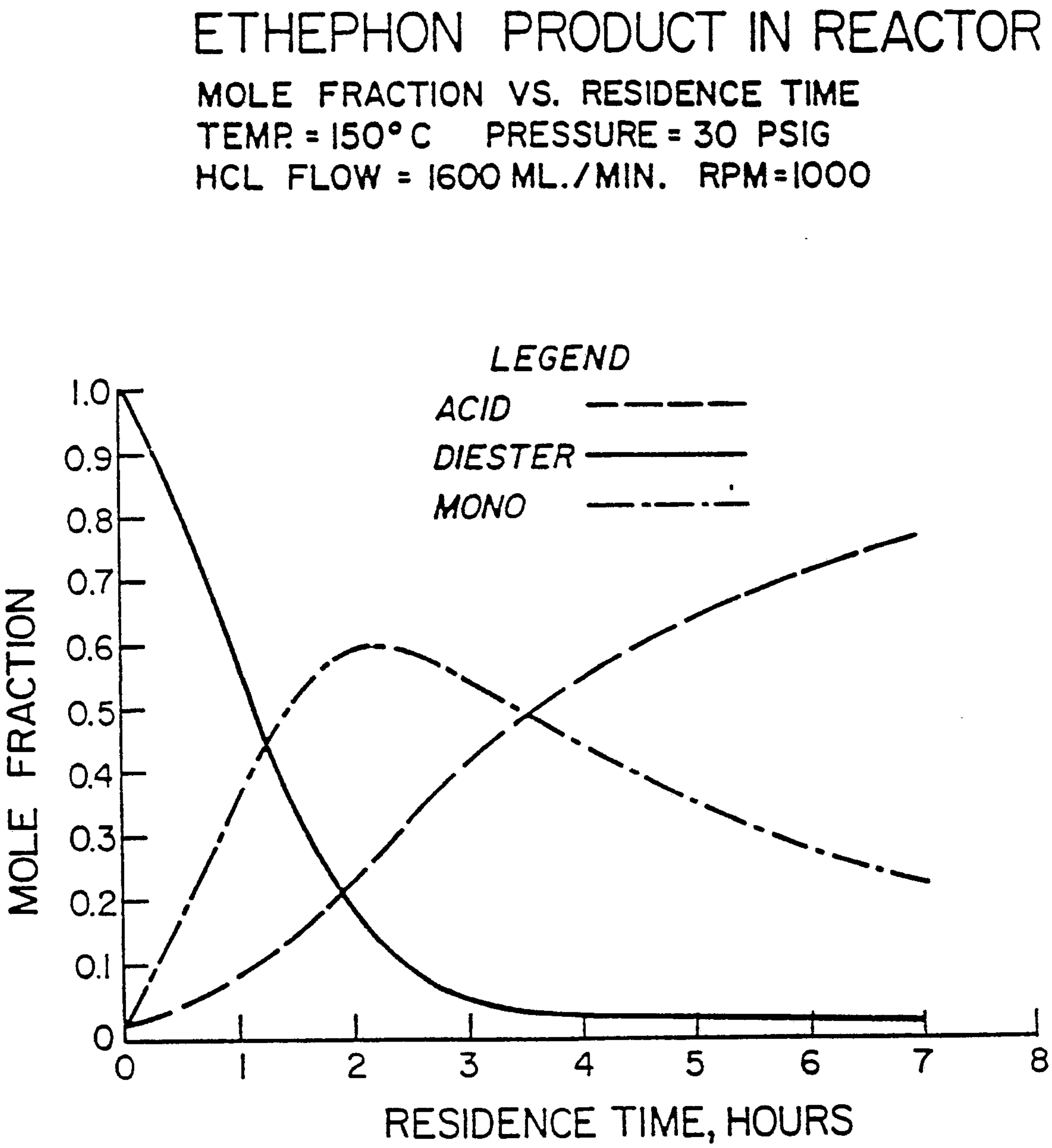
ETHEPHON PRODUCT IN REACTOR
MOLE FRACTION VS. RESIDENCE TIME
TEMP. = 150° C PRESSURE = 30 PSIG
HCL FLOW = 1600 ML./MIN. RPM=1000
LEGEND
ACID
DIESTER
MONO
MOLE FRACTION
1.0
0.9
0.8
0.7
0.6
0.5
0.4
0.3
0.2
0.1
0
0
1
2
3
4
5
6
7
8
RESIDENCE TIME, HOURS

FIG. 2

ETHEPHON PRODUCT IN REACTOR
MOLE FRACTION VS. RESIDENCE TIME
TEMP. = 150° C PRESSURE = 52.5 PSIG
HCL FLOW = 1600 ML./MIN. RPM = 1000

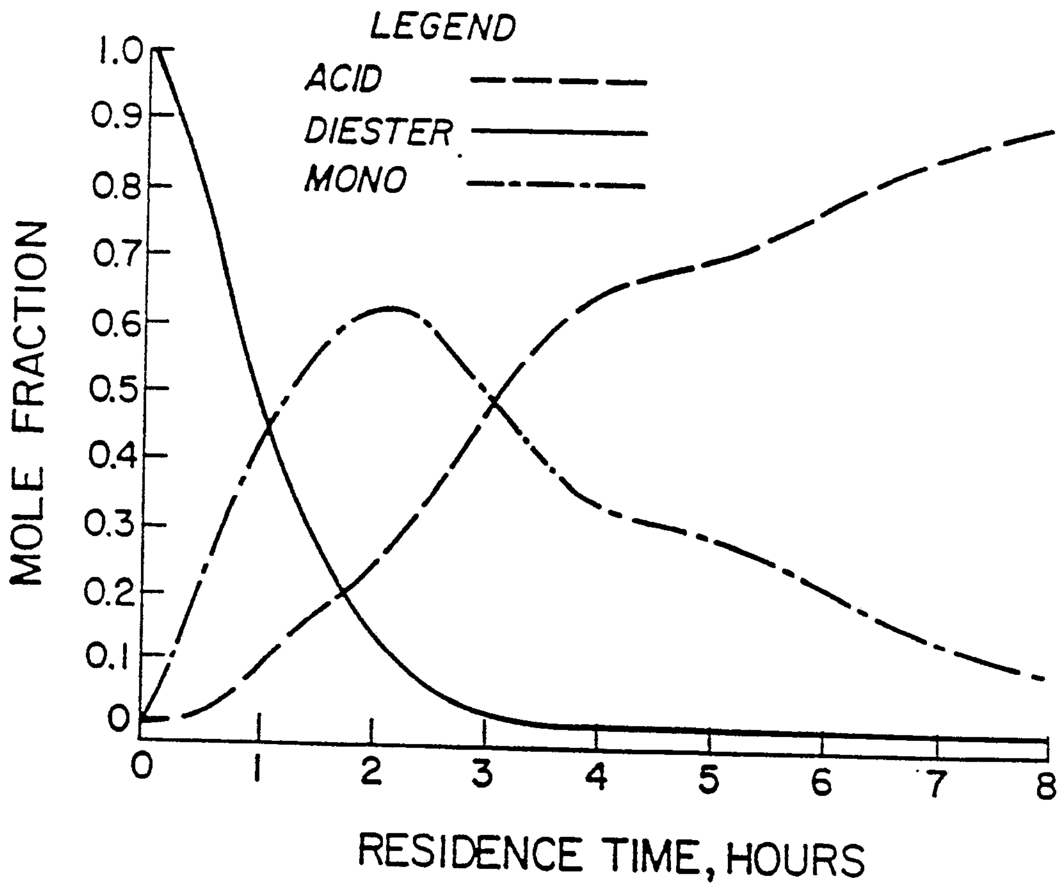


F I G. 3

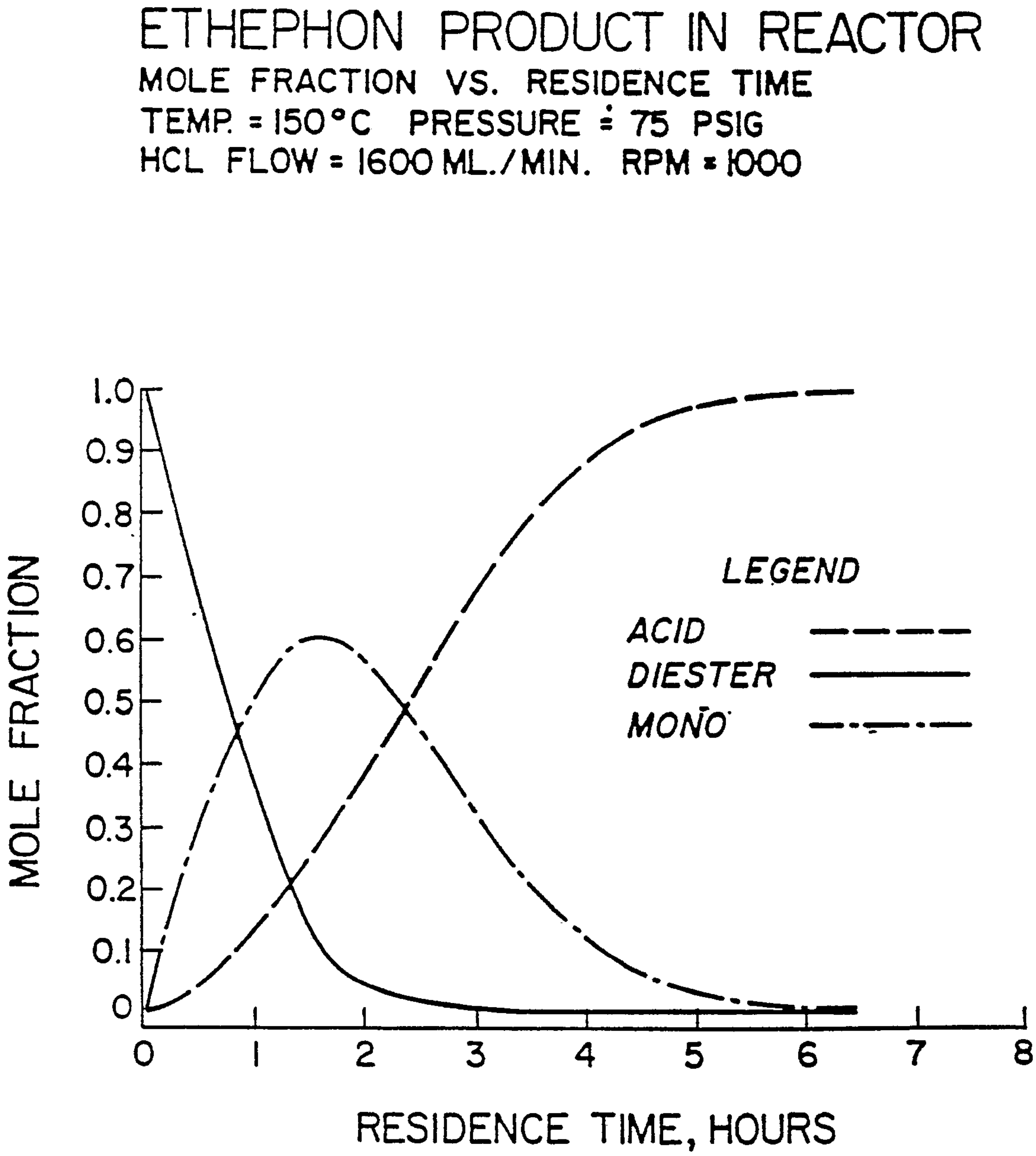
ETHEPHON PRODUCT IN REACTOR
MOLE FRACTION VS. RESIDENCE TIME
TEMP. = 150°C PRESSURE ≐ 75 PSIG
HCL FLOW = 1600 ML./MIN. RPM = 1000
MOLE FRACTION
1.0
0.9
0.8
0.7
0.6
0.5
0.4
0.3
0.2
0.1
0
LEGEND
ACID
DIESTER
MONO
0
1
2
3
4
5
6
7
8
RESIDENCE TIME, HOURS

FIG. 4

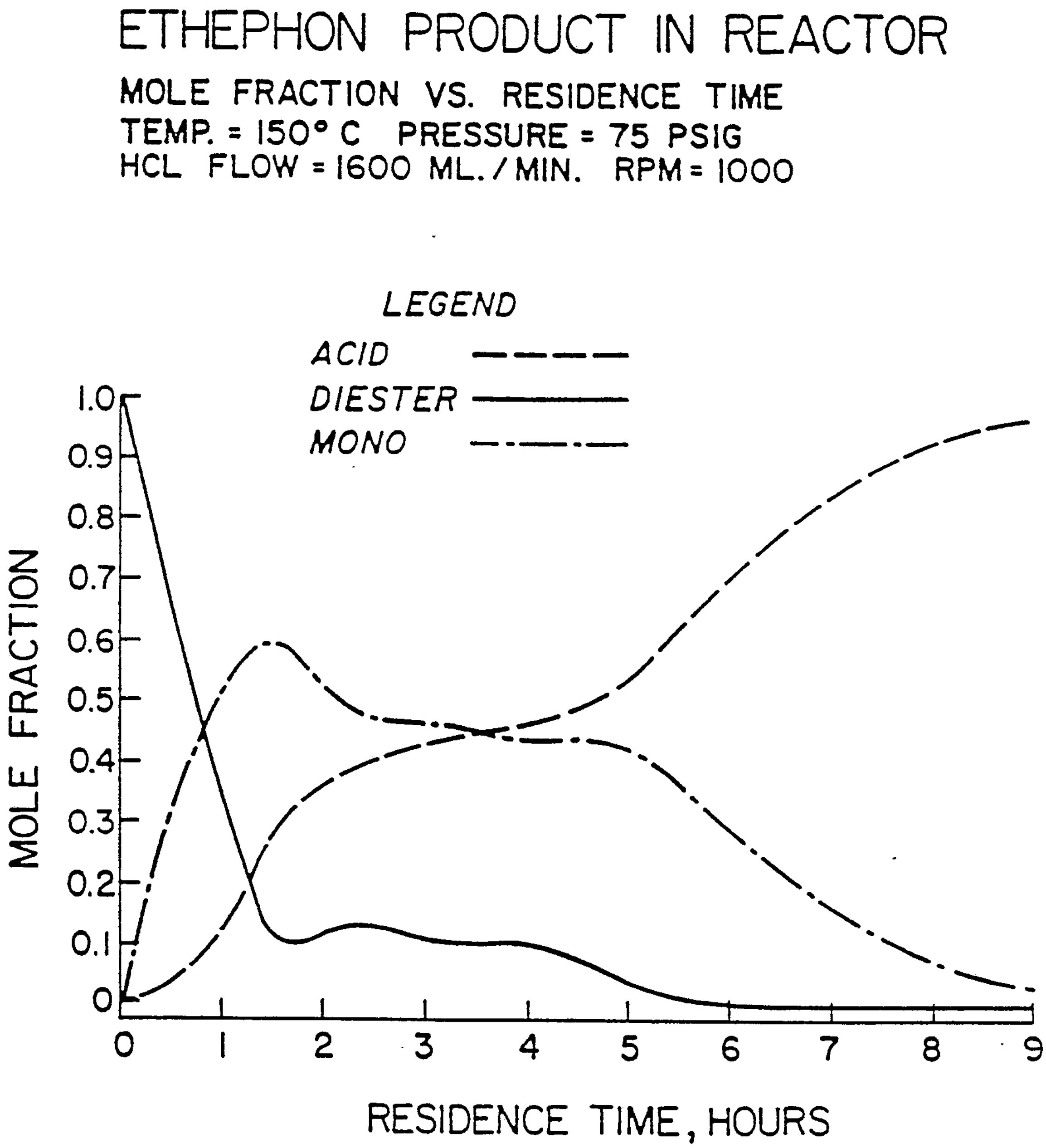
ETHEPHON PRODUCT IN REACTOR
MOLE FRACTION VS. RESIDENCE TIME
TEMP. = 150° C PRESSURE = 75 PSIG
HCL FLOW = 1600 ML./MIN. RPM = 1000
LEGEND
ACID
DIESTER
MONO
MOLE FRACTION
1.0
0.9
0.8
0.7
0.6
0.5
0.4
0.3
0.2
0.1
0
0 1 2 3 4 5 6 7 8 9
RESIDENCE TIME, HOURS

FIG. 5

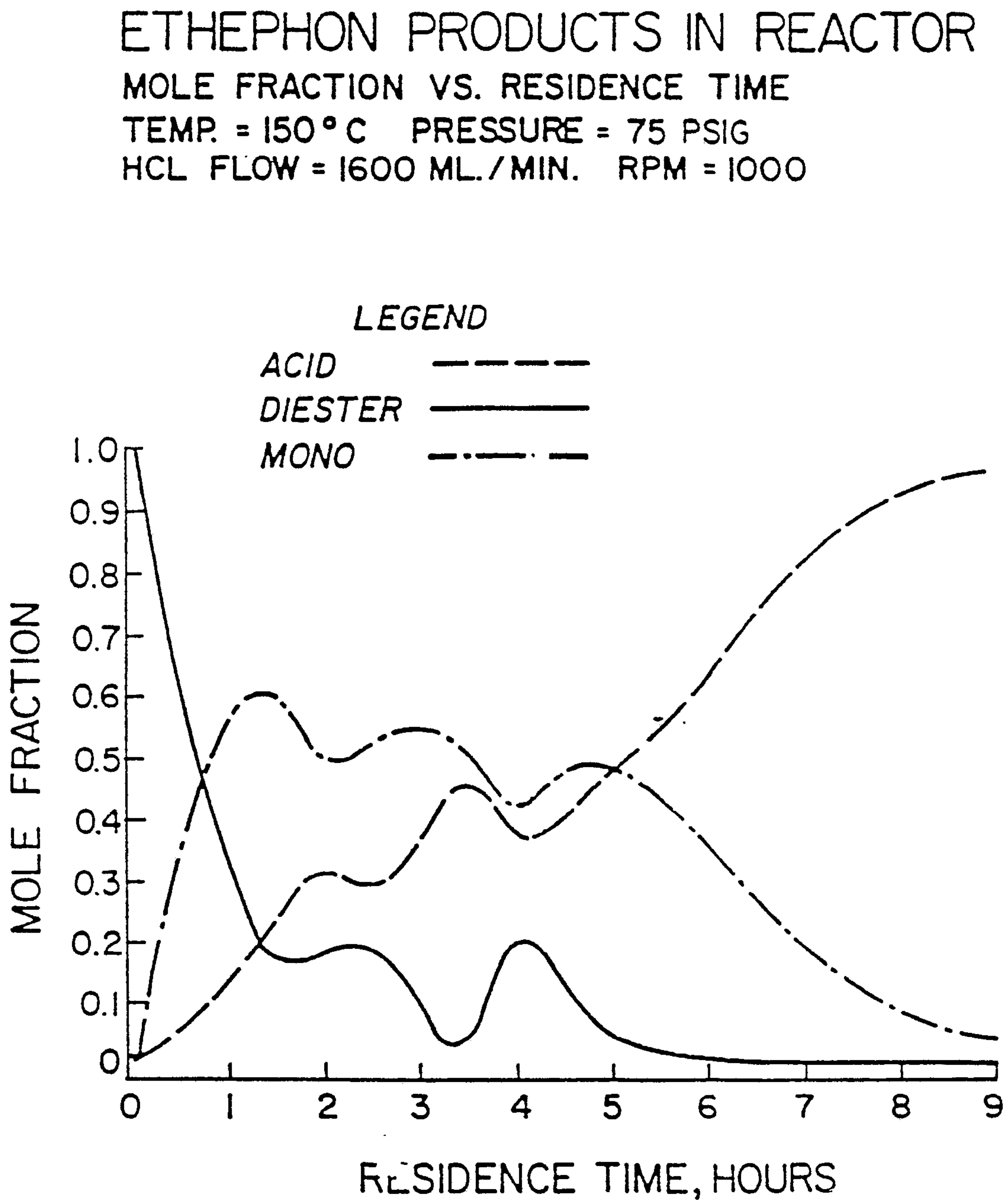
ETHEPHON PRODUCTS IN REACTOR
MOLE FRACTION VS. RESIDENCE TIME
TEMP. = 150 °C PRESSURE = 75 PSIG
HCL FLOW = 1600 ML./MIN. RPM = 1000
LEGEND
ACID
DIESTER
MONO
MOLE FRACTION
1.0
0.9
0.8
0.7
0.6
0.5
0.4
0.3
0.2
0.1
0
0
1
2
3
4
5
6
7
8
9
RESIDENCE TIME, HOURS

FIG. 6